# EUROPEAN PATENT APPLICATION

(11) **EP 2 899 792 A1**
(43) Date of publication of application: **29.07.2015**
(21) Application number: 14847815.9
(22) Date of filing: 30.09.2014
(51) Int. Cl.: H01M 10/052, H01M 4/525, H01M 4/505, H01M 10/0567, H01M 10/0569

(54) **LITHIUM SECONDARY BATTERY**

(30) Priority: 30.09.2013 KR 20130116487
(71) Applicant: LG Chem, Ltd., Seoul 150-721 (KR)
(72) Inventor: HONG, Yeon-Suk, Daejeon 305-738 (KR); OH, Jae-Seung, Daejeon 305-738 (KR); LEE, Byoung-Bae, Daejeon 305-738 (KR); LEE, Sang-Hyun, Daejeon 305-738 (KR); CHOI, Kwon-Young, Daejeon 305-738 (KR); KIM, Dong-Su, Daejeon 305-738 (KR); LEE, Hyo-Jin, Daejeon 305-738 (KR)
(74) Representative: Goddar, Heinz J.
(86) International application number: PCT/KR2014/009228
(87) International publication number: WO 2015/047045

(57) **Abstract**

The present disclosure relates to a lithium secondary battery. More specifically, the lithium secondary battery of the present disclosure includes a cathode, an anode, a separator interposed between the cathode and the anode, and a non-aqueous electrolyte solution, wherein the non-aqueous electrolyte solution includes an ionizable lithium salt and an organic solution, and includes, based on 100 parts by weight of the non-aqueous electrolyte solution, (a) 1 part by weight to 10 parts by weight of a compound containing a vinylene group or vinyl group, and (b) 0.1 parts by weight to 10 parts by weight of a dinitrile-based ether compound of a particular structure, and the cathode includes a cathode active material including a mixture of a first cathode active material LiₓCoO₂(0.5<x<1.3) and a second cathode active material LiₓM_{y}O₂(M is Ni_{1-a-b}MnₐCo_{b}(0.05≤a≤0.4, 0.1≤b≤0.4, 0.4≤1-a-b≤0.7) in which x+y=2 and 0.95≤x≤1.05. The lithium secondary battery of the present disclosure has a high capacity, and remarkably suppresses a swelling phenomenon at high temperature of the battery.

## Description

### Technical Field

The present disclosure relates to a lithium secondary battery that ensures excellent safety and suppresses a swelling phenomenon at high temperature.

The present application claims priority to Korean Patent Application No. 10-2013-0116487 filed in the Republic of Korea on September 30, 2013, the disclosures of which are incorporated herein by reference.

Also, the present application claims priority to Korean Patent Application No. 10-2014-0131487 filed in the Republic of Korea on September 30, 2014, the disclosures of which are incorporated herein by reference.

### Background Art

Recently, there has been growing interest in energy storage technologies. As the application fields of energy storage technologies have been extended to mobile phones, camcorders, lap-top computers and even electric cars, there is an increasing demand for high energy density of batteries being used as a power source of electronic devices. In keeping up with the demand, intensive research and development of lithium secondary batteries considered to be most suitable is being done now.

Among currently available secondary batteries, lithium secondary batteries developed in the early 1990's include an anode made of a carbon material capable of intercalating/deintercalating lithium ions, a cathode made of lithium-containing oxide, and a non-aqueous electrolyte solution in which a proper amount of lithium salts is dissolved in a mixed organic solvent.

As lithium secondary batteries are extensively used in a wide range of applications, the use of lithium secondary batteries in a severe environment such as a high or low temperature environment is on the rise.

However, when a lithium secondary battery is stored at high temperature in a fully charged state, lithium transition metal oxide or composite oxide used as a cathode active material becomes thermally unstable due to demetallization at a cathode.

Also, an organic solvent currently being widely used as a non-aqueous electrolyte solution includes ethylene carbonate, propylene carbonate, dimethoxyethane, gamma butyrolactone, N,N-dimethylformamide, tetrahydrofuran, or acetonitrile, and generally, during long-term storage at high temperature, these organic solvents may transform a stable structure of a battery due to gas generation caused by oxidation of an electrolyte solution, or in serious instances, may cause an internal short circuit and consequently combustion or explosion of a battery in the event of internal heat generation caused by overcharge or overdischarge.

To solve these problems, various studies have been made, but no effective solution was proposed so far, and particularly, with the recent increasing demand for high performance lithium secondary batteries, its solution is in an urgent need.

### DISCLOSURE

### Technical Problem

Therefore, the present disclosure is directed to providing a lithium secondary battery with excellent electrochemical performance, in particular, with high capacity.

Also, the present disclosure is directed to providing a lithium secondary battery with excellent battery performance while significantly suppressing a battery swelling phenomenon caused by gas generated, particularly, during storage at high temperature.

### Technical Solution

To achieve the above object, a lithium secondary battery of the present disclosure includes a cathode, an anode, a separator interposed between the cathode and the anode, and a non-aqueous electrolyte solution, wherein the cathode includes a cathode active material including a mixture of a first cathode active material LiₓCoO₂(0.5<x<1.3) and a second cathode active material LiₓM_{y}O₂(M is Ni_{1-a-b}MnₐCo_{b}(0.05≤a≤0.4, 0.1≤b≤0.4, 0.4≤1-a-b≤0.7) in which x+y=2 and 0.95≤x≤1.05, and the non-aqueous electrolyte solution includes an ionizable lithium salt and an organic solution, and includes, based on 100 parts by weight of the non-aqueous electrolyte solution, (a) 1 part by weight to 10 parts by weight of a compound containing a vinylene group or vinyl group, and (b) 0.1 parts by weight to 10 parts by weight of a dinitrile-based ether compound represented by the following chemical formula 1:

[Chemical Formula 1] **CN-(CH₂)ₙ-O-(CH₂)ₘ-CN**

where n and m are each independently an integer from 1 to 6.

In the present disclosure, the compound containing a vinylene group or vinyl group may include a vinylene carbonate-based compound, an acrylate-based compound containing a vinyl group, a sulfonate-based compound containing a vinyl group, and an ethylene carbonate-based compound containing a vinyl group, singularly or in combination. More specifically, typically, the vinylene carbonate-based compound may be, for example, vinylene carbonate, and the compound containing a vinyl group may be represented by the following chemical formula 2: 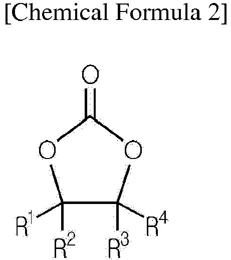 where at least one of R₁ through R₄ contains a vinyl group, and the others are each independently hydrogen, halogen, an alkyl group of C₁~C₆ substituted or unsubstituted with halogen, an aryl group of C₆~C₁₂ substituted or unsubstituted with halogen, an alkenyl group of C₂~C₆ substituted or unsubstituted with halogen, or a sulfonate group.

In the present disclosure, the dinitrile-based ether compound may include, but is limited to, for exaxmple, bis(cyanomethyl)ether, bis(cyanoethyl)ether, bis(cyanopropyl)ether, bis(cyanobutyl)ether, bis(cyanopentyl)ether, and bis(cyanohexyl)ether, singularly or in combination.

In the present disclosure, preferably, a mixing weight ratio of the first cathode active material and the second cathode active material may be first cathode active material : second cathode active material = 1:1 ~ 9:1.

### Advantageous Effects

The lithium secondary battery of the present disclosure may achieve a high capacity using two types of particular cathode active materials.

The lithium secondary battery of the present disclosure may satisfy the high performance battery requirements by maintaining the general battery performance to a high level, for example, in the way of increasing the conductivity of an electrolyte solution using the above particular additives in the electrolyte solution and enhancing an interfacial resistance and an initial capacity of an assembled battery, and may significantly reduce a battery swelling phenomenon by suppressing gas generation during storage at high temperature, particularly, in the presence of a particular film formed on the electrode surface.

### BRIEF DESCRIPTION OF THE DRAWINGS

The accompanying drawing illustrates a preferred embodiment of the present disclosure and together with the foregoing disclosure, serves to provide further understanding of the technical spirit of the present disclosure, and thus, the present disclosure is not construed as being limited to the drawing.
FIG. 1 is a graph illustrating measurement of thickness increase during long-term storage at high temperature for secondary batteries manufactured according to examples 1 and 2 and comparative examples 1 and 2.
FIG. 2 is a graph illustrating measurement of discharge capacity as a function of cycle for secondary batteries manufactured according to example 2 and comparative example 2.

### MODE FOR CARRYING OUT THE INVENTION

Hereinafter, the present disclosure will be described in detail. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

As described in the foregoing, in keeping up with the recent increasing demand for a high performance lithium secondary battery, the present disclosure provides a mixture of a first cathode active material LiₓCoO₂(0.5<x<1.3) and a second cathode active material LiₓMyO₂(M is Ni_{1-a-b}MnₐCo_{b}(0.05≤a≤0.4, 0.1≤b≤0.4, 0.4≤1-a-b≤0.7), x+y=2, 0.95≤x≤1.05), as a cathode active material for forming a cathode. The two types of cathode active materials according to the present disclosure have a high energy density and contribute to a high capacity. Preferably, such effects are noticeable when mixed at a mixing weight ratio of first cathode active material : second cathode active material = 1:1 ~ 9:1, more preferably, 1:1 ~ 8:2, most preferably, 1:1 ~ 7:3.

The first cathode active material represented by the above chemical formula LiₓCoO₂ is used in which some of cobalt is not substituted (doped) with other element.

Also, the second cathode active material represented by the above chemical formula LiₓM_{y}O₂ may ensure high cycle stability, excellent storage stability, and high temperature stability while achieving high capacity due to having a particular composition ratio defined by the above chemical formula.

A further detailed description of the second cathode active material according to the present disclosure is provided below.

First, the molar fraction (1-a-b) of the Ni is from 0.4 to 0.7, that is, nickel exists in a larger amount than manganese and cobalt. When the nickel content is less than 0.4, it is difficult to expect a high capacity, and when the nickel content exceeds 0.7, there is a problem with a significant reduction in safety.

Also, because the cobalt content (b) is from 0.1 to 0.4, when the cobalt content is less than 0.1, it is difficult to achieve sufficient rate characteristics and a high powder density at the same time, and when the cobalt content exceeds 0.4, a reversible capacity reduces to some extent.

Also, when the lithium content is excessively low (x<0.95), low rate characteristics are displayed and a reversible capacity reduces, and when the content is excessively high (x>1.05), the safety reduces during charge/discharge cycles, particularly, at high temperature and high voltage (for example, temperature: 60°C, voltage: 4.35V).

Preferably, the second cathode active material has a structure that Ni²⁺ and Ni³⁺ coexist in the MO layer and some Ni²⁺ is inserted into the reversible lithium layer. That is, Ni ions inserted into the reversible lithium layer are preferably Ni²⁺. Because Ni²⁺ is very similar in size to lithium ions (Li⁺), Ni²⁺ does not transform a crystal structure when inserted into the reversible lithium layer, and serves to inhibit the structure destruction by the repulsion of the MO layer in the event of deintercalation of lithium ions during charge.

Also, the inserted Ni²⁺ serves to support the MO layer into which Ni²⁺ is inserted, and thus, preferably, Ni²⁺ needs to be inserted with an amount sufficient to at least stably support the MO layer to improve desired charge stability and cycle stability. At the same time, Ni²⁺ needs to be inserted with such an amount that the inserted Ni²⁺ does not impede the intercalation and deintercalation of lithium ions in the reversible lithium layer to prevent deteriorate of the rate characteristics. That is, when a molar fraction of Ni²⁺ inserted into the reversible lithium layer is too high, cation mixing increases and a rock salt structure electrochemically inactive in part is formed, which hinders the charge and discharge and consequently reduces the discharge capacity.

Taking these into comprehensive consideration, the molar fraction of the Ni²⁺ inserted and bonded in the reversible lithium layer is preferably from 0.03 to 0.07 based on the total amount of the transition metal in the second cathode active material.

In this instance, as a ratio (Li/M) of Li to the transition metal (M) reduces, an amount of Ni inserted into the MO layer gradually increases, and when an excessively large amount immigrates to the reversible lithium layer, the movement of Li⁺ is interrupted during charge and discharge, resulting in a reduced reversible capacity or deteriorated rate characteristics. In contrast, when the ratio of Li/M is too high, an amount of Ni inserted into the MO layer is too low, causing structural unstability, which produces undesirable results such as battery safety reduction and life characteristics deterioration. Further, at an excessively high Li/M value, an amount of unreacted Li₂CO₃ increases, producing a large amount of impurities, which reduces the chemical resistance and high temperature stability. Thus, in one preferred example, a ratio of Li:M in the LiNiMO₂ may be 0.95~1.04:1.

In the present disclosure, the first cathode active material preferably has a monolithic structure. Thus, the first cathode active material scarcely has an inner porosity, and with the increasing grain size, stability of crystal grains is improved, which may ease the fabrication of a battery including the same and enhance the efficiency in a manufacturing process.

Also, the second cathode active material preferably has an agglomerated structure, that is, a structure having an inner porosity in the presence of an agglomerated structure of fine grains. The agglomerated grain structure is characterized in extending the reversible capacity of the cathode while achieving high rate characteristics by maximizing the surface area reacting with the electrolyte solution.

Optionally, the cathode active material of the present disclosure may further include other cathode active material commonly used in the art without departing from the scope of the present disclosure. For example, the cathode active material of the present disclosure may include any one selected from the group consisting of LiₓNiO₂(0.5<x<1.3), LiₓMnO₂(0.5<x<1.3), LiₓMn₂O₄(0.5<x<1.3), LiₓNi_{1-y}Co_{y}O₂(0.5<x<1.3, 0<y<1), LiₓCo_{1-y}Mn_{y}O₂(0.5<x<1.3, 0≤y<1), LiₓNi_{1-y}Mn_{y}O₂(0.5<x<1.3, 0≤y<1), Liₓ(NiₐCo_{b}Mn_{c})O₄(0.5<x<1.3, 0<a<2, 0<b<2, 0<c<2, a+b+c=2), LiₓMn_{2-z}Ni_{z}O₄(0.5<x<1.3, 0<z<2), LiₓMn_{2-z}Co_{z}O₄(0.5<x<1.3, 0<z<2), LiₓCoPO₄(0.5<x<1.3) and LiₓFePO₄(0.5<x<1.3) or mixtures thereof, and the lithium-containing transition metal oxide may be coated with a metal such as aluminum (Al) or metal oxide. Also, in addition to the lithium-containing transition metal oxide, sulfide, selenide, and halide may be used.

The cathode active material according to the present disclosure may be, according to a common method in the art, mixed with a conductive material, a binder, and an organic solvent to produce a mixture, which is coated on a current collector, to manufacture a cathode.

However, in the manufacture of the lithium secondary battery from the two types of cathode active materials according to the present disclosure using the common method, the electrolyte solution may cause a side reaction on the surface of the cathode active material, resulting in a swelling phenomenon of the battery, and this phenomenon gets severer when the battery is kept at high temperature, and does not comply with safety standards of lithium secondary batteries being enforced more strictly now than ever before.

Accordingly, to solve the problem, , the present disclosure provides a non-aqueous electrolyte solution including an ionizable lithium salt and an organic solvent, in which the non-aqueous electrolyte solution includes (a) 1 part by weight to 10 parts by weight of a compound containing a vinylene group or vinyl group; and (b) 0.1 parts by weight to 10 parts by weight of a dinitrile-based ether compound of a particular structure, based on 100 parts by weight of the non-aqueous electrolyte solution.

The compound containing a vinylene group or vinyl group used in the present disclosure forms a passivation membrane called a solid electrolyte interphase (SEI) membrane on the anode surface during charge of the battery, which may impede a micro-or macro thermal short occurring in the battery, and consequently prevent or inhibit ignition of the battery caused by heat inside or outside of the battery when compared toan organic solvent being widely in a non-aqueous electrolyte solution, for example, ethylene carbonate.

However, when the compound containing a vinylene group or vinyl group according to the present disclosure is used in a carbonate electrolyte solution, due to a disadvantage of being very weak thermally and prone to decomposition at high temperature, resulting decomposition gas deforms a pouch-type or can-type battery assembly, causing an internal short circuit, and in serious instances, ignition or explosion of the battery.

When only the compound containing vinylene group or vinyl group is used as described in the foregoing, it is impossible to ensure safety sufficient to prevent an internal short circuit of the battery, and to solve the problem, the inventors of the present disclosure has further mixed with the above dinitrile-based ether compound of a particular structure without deteriorating the properties of the compound containing a vinylene group or vinyl group. When the dinitrile-based ether compound according to the present disclosure is used together, a complex is formed on the surface of the cathode made from the cathode active material according to the present disclosure, which may suppress an oxidation reaction of the electrolyte solution and the cathode and impede heat generation, as a consequence, prevent an internal short circuit caused by a rapid temperature increase of the battery. Also, during storage at high temperature, there are effects of impeding decomposition of the compound containing a vinylene group or vinyl group and the electrolyte solution and preventing a battery swelling phenomenon. Further, the dinitrile-based ether compound according to the present disclosure has a higher dielectric constant and lower viscosity than a traditional chain carbonate or aliphatic mononitrile compound, and thus, increases the conductivity of the electrolyte solution and improves interfacial resistance and initial capacity of an assembled battery, thereby enhancing the electrochemical performance of the battery.

Accordingly, as the lithium secondary battery of the present disclosure uses the two types of particular cathode active materials according to the present disclosure and the binary system additive together, the battery has excellent performance in general including high capacity and low interfacial resistance and remarkably enhanced safety, particularly, safety during storage at high temperature.

In the present disclosure, the dinitrile-based ether compound may be represented by the following chemical formula 1:

[Chemical Formula 1] **CN-(CH₂)ₙ-O-(CH₂)ₘ-CN**

where n and m are each independently an integer from 1 to 6.

For example, the dinitrile-based ether compound according to the present disclosure may include, but not limited to, bis(cyanomethyl)ether, bis(cyanoethyl)ether, bis(cyanopropyl)ether, bis(cyanobutyl)ether, bis(cyanopentyl)ether, bis(cyanohexyl)ether, and the like, singularly or in combination.

Preferably, the content of the dinitrile-based ether compound according to the present disclosure is from 0.1 wt% to 10 wt%, preferably, from 1 wt% to 10 wt%, based on the total weight of the non-aqueous electrolyte solution. When the content is less than 0.1 wt%, a battery swelling phenomenon prevention effect is insufficient, and when the content exceeds 10 wt%, the viscosity of the electrolyte solution increases and the ion conductivity reduces, resulting in deterioration in battery performance.

For example, the compound containing a vinylene group or vinyl group according to the present disclosure includes a vinylene carbonate-based compound, an acrylate-based compound containing a vinyl group, a sulfonate-based compound containing a vinyl group, an ethylene carbonate-based compound containing a vinyl group, and the like.

More specifically, the vinylene carbonate-based compound may be, for example, vinylene carbonate (VC), and the compound containing a vinyl group may be a compound represented by the following chemical formula 2, for example, vinyl ethylene carbonate (VEC): 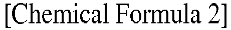 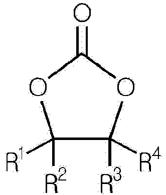 where at least one of R₁ through R₄ contains a vinyl group, and the others are each independently hydrogen, halogen, an alkyl group of C₁~C₆ substituted or unsubstituted with halogen, an aryl group of C₆~C₁₂ substituted or unsubstituted with halogen, an alkenyl group of C₂~C₆ substituted or unsubstituted with halogen, or a sulfonate group.

Preferably, the content of the cyclic carbonate substituted with halogen represented by the above chemical formula 1 according to the present disclosure, and the compound containing a vinylene group or vinyl group is from 1 wt% to 10 wt% based on the total weight of the non-aqueous electrolyte solution. When the content is less than 1 wt%, a swelling phenomenon prevention effect at high temperature is insufficient, and when the content exceeds 10 wt%, a high temperature life greatly reduces during charge and discharge cycles at high temperature.

Also, a mixing ratio of the dinitrile-based ether compound represented by the above chemical formula 1 and the compound containing a vinylene group or vinyl group may be properly employed based on a particular purpose for which the battery is used, and for example, the mixing ratio may include, but not limited to, a weight ratio of the dinitrile-based ether compound: the compound containing a vinylene group or vinyl group= 1 : 0.5 ~ 1:5. When the weight ratio is less than 0.5, a swelling phenomenon prevention effect at high temperature is insufficient, and when the weight ratio exceeds 5, there is a reduction in high rate characteristics caused by a reduction in ion conductivity of the electrolyte solution in the presence of the dinitrile-based ether compound.

Also, in addition to the compound containing a vinylene group or vinyl group, the present disclosure may further include a compound capable of forming a passivation membrane on the anode surface, as needed, without departing from the scope of the present disclosure. Such compound includes, as a non-limiting example, cyclic carbonate substituted with halogen, an S-based compound such as propane sultone, ethylene sulfite, and 1,3-propane sultone, a lactam-based compound such as N-acetyl lactam, and the like.

The lithium salt included as an electrolyte in the non-aqueous electrolyte solution of the present disclosure includes, without limitation, those generally used in an electrolyte solution for a lithium secondary battery, and for example, an anion of the lithium salt may be any one selected from the group consisting of F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF2⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, and (CF₃CF₂SO₂)₂N⁻.

The organic solvent included in the non-aqueous electrolyte solution of the present disclosure includes, without limitation, those generally used in an electrolyte solution for a lithium secondary battery, and typically, may include, for example, any one selected from the group consisting of propylene carbonate (PC), ethylene carbonate (EC), diethyl carbonate (DEC), dimethyl carbonate (DMC), ethyl methyl carbonate (EMC), methylpropyl carbonate, dipropyl carbonate, dimethylsulfoxide, acetonitrile, dimethoxyethane, diethoxyethane, vinylene carbonate, sulforane, gamma-butyrolactone, propylene sulfite, and tetrahydrofurane, or mixtures thereof. In particular, , cyclic carbonate such as ethylene carbonate and propylene carbonate among the carbonate-based organic solvents is preferred because it corresponds to a high viscosity organic solvent and thus has a high dielectric constant and dissociates the lithium salt from the electrolyte well, and it is more preferred to mix the cyclic carbonate with linear carbonate having low viscosity and low dielectric constant such as dimethyl carbonate and diethyl carbonate at a proper mixing ratio to prepare an electrolyte solution having high electrical conductivity.

The non-aqueous electrolyte solution for a lithium secondary battery according to the present disclosure is poured into an electrode assembly including a cathode, an anode, and a separator interposed between the cathode and the anode to manufacture a lithium secondary battery. The anode of the electrode assembly may include those generally used to manufacture a lithium secondary battery.

The anode active material generally includes a carbon material, lithium metal, silicon or tin, which allows intercalation and deintercalation of lithium ions, and may include metal oxide having a potential less than 2V relative to lithium, such as TiO₂ and SnO₂. The carbon material is preferred, and both low crystallity carbon and high crystallity carbon may be used as the carbon material. The low crystallity carbon typically includes soft carbon and hard carbon, and the high crystallity carbon typically includes high temperature baked carbon such as natural graphite, Kish graphite, pyrolytic carbon, mesophase pitch based carbon fiber, meso-carbon microbeads, mesophase pitches, petroleum or coal tar pitch derived cokes, and the like. In this instance, the anode may include a binder, and the binder may include various types of binder polymers such as vinylidene fluoride-hexafluoropropylene copolymer (PVDF-co-HFP), polyvinylidenefluoride, polyacrylonitrile, polymethylmethacrylate, and the like.

The lithium secondary battery of the present disclosure is not limited to a particular outer shape, but may include a cylindrical shape using a can, a prismatic shape, a pouch shape or a coin shape.

Hereinafter, the present disclosure will be described in detail through embodiments. The embodiments of the present disclosure, however, may take several other forms, and the scope of the present disclosure should not be construed as being limited to the following embodiments. The embodiments of the present disclosure are provided to more fully explain the present disclosure to those having ordinary knowledge in the art to which the present disclosure pertains.

### EXAMPLE 1

### 1-1. Manufacture of cathode

Monolithic LiCoO₂ having D₅₀ of about 15 µm~20 µm and LiNi_{0.53}Mn_{0.27}Co_{0.2}O₂ having D₅₀ of about 5 µm~8 µm in which fine particles of about 1 µm~2 µm agglomerate together were mixed at a mixing ratio of 7:3, to manufacture a cathode active material.

The mixed cathode active material was mixed with Super-P as a conductive material and polyvinylidene fluoride as a binder at a weight ratio of 92:4:4, followed by addition of N-methyl pyrrolidone (NMP), to prepare a slurry. The prepared cathode slurry was coated on an aluminum current collector and dried at a vacuum oven of 120°C, to manufacture a cathode.

### 1-2. Manufacture of electrolyte solution

1M LiPF₆ solution having a composition of EC: PC: DEC = 3: 2: 5 was used as an electrolyte solution, and 3 wt% of vinylene carbonate (VC), 2 wt% of fluoroethylene carbonate (FEC), and 3 wt% of ethylene glycol bispropionitrile were added to the electrolyte solution.

### 1-3. Manufacture of lithium secondary battery

After an anode was manufactured using artificial graphite as an anode active material, a polyethylene separator was disposed between the cathode manufactured in example 1-1 and the anode. Subsequently, a lithium polymer battery was manufactured by a general method, the electrolyte solution prepared in example 1-2 was poured into the assembled battery assembled with an aluminum laminate casing.

### EXAMPLE 2

Except ethylene glycol bispropionitrile was used with the content of 5 wt%, a lithium polymer battery was manufactured by the same method as example 1.

### EXAMPLE 3

Except 2 wt% of vinyl ethylene carbonate (VEC) was used instead of 3 wt% of vinylene carbonate (VC), and ethyleneglycol bispropionitrile was used with the content of 5 wt%, a lithium polymer battery was manufactured by the same method as example 1.

### COMPARATIVE EXAMPLE 1

Except ethyleneglycol bispropionitrile was not added to an electrolyte solution, a lithium polymer battery was manufactured by the same method as example 1.

### COMPARATIVE EXAMPLE 2

Except, instead of ethyleneglycol bispropionitrile, 5 wt% of a dinitrile compound similar thereto, for example, succinonitrile was added to an electrolyte solution, a lithium polymer battery was manufactured by the same method as example 1.

### COMPARATIVE EXAMPLE 3

Except vinylene carbonate (VC) was not added to an electrolyte solution, a lithium polymer battery was manufactured by the same method as example 1.

### COMPARATIVE EXAMPLE 4

Except only LiNi_{0.53}Mn_{0.27}Co_{0.2}O₂ was used as a cathode active material and 5 wt% of ethyleneglycol bispropionitrile was added to an electrolyte solution, a lithium polymer battery was manufactured by the same method as example 1.

### TEST EXAMPLE 1: HIGH TEMPERATURE STORAGE SAFETY EVALUATION

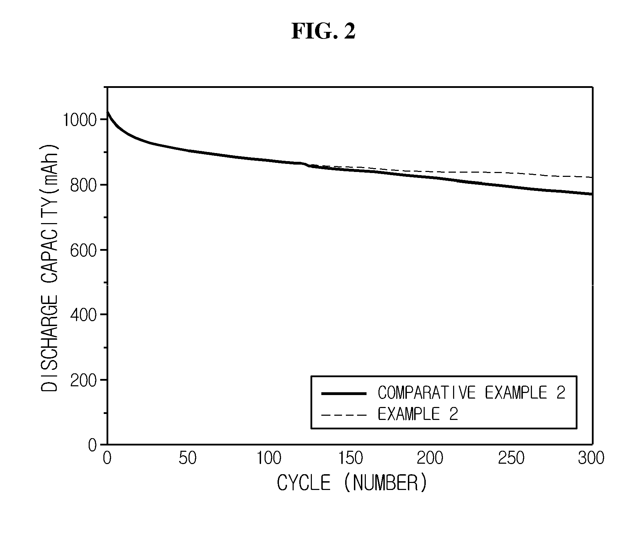

While being stored in a 4.2V fully charged state at 90°C for 4 hours, each battery manufactured in examples 1 and 2 and comparative example 1, 2, 3, and 4 was measured for an initial thickness and a thickness change after storage, and their results are shown in the following Table 1 and FIG. 2.

### TEST EXAMPLE 2: CHARGE/DISCHARGE PERFORMANCE EVALUATION

### <Charging and discharge cycle evaluation>

Each battery was charged with a constant current of 1C=980 mA in a temperature environment of 45°C, and after the battery voltage reached 4.2V, was charged the 1st cycle at a constant voltage of 4.2V until the charge current value reaches 50 mA. The battery subjected to the 1st charge cycle was discharged at a constant current of 1C until the battery voltage reaches 3V, and a discharge capacity at the 1st cycle was calculated. Subsequently, charge and discharge was repeated 500 cycles, and as a result, a discharge capacity retention (%), or a ratio of 500th cycle discharge capacity to 1st cycle discharge capacity is shown in the following Table 1. In this instance, high temperature charge and discharge cycle characteristics of example 2 and comparative example 2 are shown in FIG. 2.

In the following Table 1, a thickness change (Δt) was represented as a relative value to 100% of a thickness increase of comparative example 2, and a discharge capacity retention (%) was calculated by the following equation and its result is shown as below.

Discharge capacity retention (%) = [discharge capacity at 500th cycle]/[discharge capacity at 1st cycle] X 100.

**Table 1**

| | Δt (%) | Discharge capacity retention (%) |
|---|---|---|
| Example 1 | 75.3 | 84 |
| Example 2 | 63 | 85 |
| Example 3 | 66 | 88 |
| Comparative example 1 | 100 | 81 |
| Comparative example 2 | 98 | 79 |
| Comparative example 3 | 55 | 64 |
| Comparative example 4 | 70 | 70 |

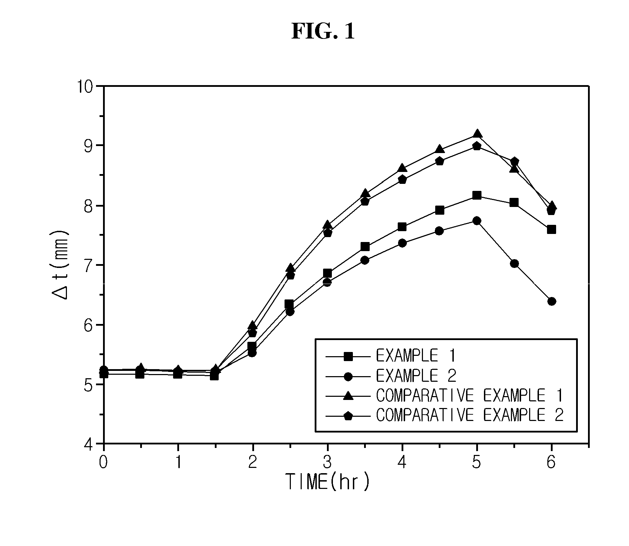

Referring to the above Table 1 and FIG. 1, it can be seen that when compared to comparative examples 1 and 2, the battery according to the present disclosure (examples 1, 2, and 3) greatly suppresses an thickness increase (swelling phenomenon) during long-term storage at high temperature. When 3 wt% of ethyleneglycol bispropionitrile was added, high temperature swelling was suppressed about 20% or more, and when 5 wt% of ethyleneglycol bispropionitrile was added, high temperature swelling was suppressed about 35% or more.

Also, according to Table 1, it can be seen that in the case of comparative examples 3 and 4, a swelling phenomenon is not evidently observed, but in terms of the discharge capacity retention, both have a remarkable deterioration in cycle characteristics at high temperature to 70% or less.

According to FIG. 2, it can be seen that when compared to the battery of comparative example 2, the battery of example 2 in which ethylene glycol bispropionitrile was added has excellent cycle characteristics at high temperature.

## Claims

1. A lithium secondary battery comprising a cathode, an anode, a separator interposed between the cathode and the anode, and a non-aqueous electrolyte solution,
wherein the cathode comprises a cathode active material including a mixture of a first cathode active material LiₓCoO₂(0.5<x<1.3) and a second cathode active material LiₓM_{y}O₂(M is Ni_{1-a-b}MnₐCo_{b}(0.05≤a≤0.4, 0.1≤b≤0.4, 0.4≤1-a-b≤0.7) in which x+y=2 and 0.95≤x≤1.05, and
the non-aqueous electrolyte solution comprises an ionizable lithium salt and an organic solution, and comprises, based on 100 parts by weight of the non-aqueous electrolyte solution,
(a) 1 part by weight to 10 parts by weight of a compound containing a vinylene group or vinyl group; and
(b) 0.1 parts by weight to 10 parts by weight of a dinitrile-based ether compound represented by the following chemical formula 1:
[Chemical Formula 1] **CN-(CH₂)ₙ-O-(CH₂)ₘ-CN**
where n and m are each independently an integer from 1 to 6.

2. The lithium secondary battery according to claim 1, wherein the compound containing a vinylene group or vinyl group is any one selected from the group consisting of a vinylene carbonate-based compound, an acrylate-based compound containing a vinyl group, a sulfonate-based compound containing a vinyl group, and an ethylene carbonate-based compound containing a vinyl group, or mixtures thereof.

3. The lithium secondary battery according to claim 1, wherein the compound containing a vinyl group is a compound represented by the following chemical formula 2: 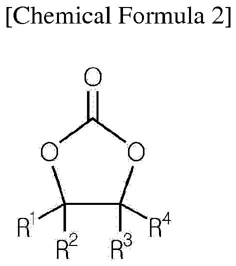 where at least one of R₁ through R₄ contains a vinyl group, and the others are each independently hydrogen, halogen, an alkyl group of C₁~C₆ substituted or unsubstituted with halogen, an aryl group of C₆~C₁₂ substituted or unsubstituted with halogen, an alkenyl group of C₂~C₆ substituted or unsubstituted with halogen, or a sulfonate group.

4. The lithium secondary battery according to claim 1, wherein the dinitrile-based ether compound is any one selected from the group consisting of bis(cyanomethyl)ether, bis(cyanoethyl)ether, bis(cyanopropyl)ether, bis(cyanobutyl)ether, bis(cyanopentyl)ether, and bis(cyanohexyl)ether, or mixtures thereof.

5. The lithium secondary battery according to claim 1, wherein a mixing weight ratio of the first cathode active material and the second cathode active material is first cathode active material: second cathode active material = 1:1 ~ 9:1.

6. The lithium secondary battery according to claim 1, wherein a mixing weight ratio of the dinitrile-based ether compound and the compound containing a vinylene group or vinyl group is dinitrile-based ether compound : compound containing a vinylene group or vinyl group = 1 : 0.5 ~ 1:5.

7. The lithium secondary battery according to claim 1, wherein an anion of the lithium salt is any one selected from the group consisting of F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, and (CF₃CF₂SO₂)₂N⁻.

8. The lithium secondary battery according to claim 1, wherein the organic solvent is any one selected from the group consisting of propylene carbonate, ethylene carbonate, diethyl carbonate, dimethyl carbonate, ethyl methyl carbonate, methylpropyl carbonate, dipropyl carbonate, dimethylsulfoxide, acetonitrile, dimethoxyethane, diethoxyethane, vinylene carbonate, sulforane, gamma-butyrolactone, propylene sulfite, and tetrahydrofurane, or mixtures thereof.
